# EUROPÄISCHE PATENTSCHRIFT

(11) **EP 2 846 512 B1**
(45) Veröffentlichungstag und Bekanntmachung des Hinweises auf die Patenterteilung: **12.10.2016**
(21) Anmeldenummer: 14180871.7
(22) Anmeldetag: 13.08.2014
(51) Int. Cl.: H04L 29/06

(54) **Verfahren und System zur nachhaltigen Abwehr von Botnet Schadsoftware**
Method and system for sustainable defence against botnet malware
Procédé et système de défense durable contre des logiciels malveillants de botnet

(30) Priorität: 04.09.2013 EP 13182958
(43) Veröffentlichungstag der Anmeldung: 11.03.2015
(73) Patentinhaber: Deutsche Telekom AG, 53113 Bonn (DE)
(72) Erfinder: Kraft, Andreas, 14129 Berlin (DE); Schmall, Markus, 40223 Düsseldorf (DE); Manecke, Alexander, 12161 Berlin (DE); Schroer, Markus, 40549 Düsseldorf (DE); Sinning, Thorsten, 52080 Aachen (DE)
(74) Vertreter: Vossius & Partner Patentanwälte Rechtsanwälte mbB

(56) Entgegenhaltungen:
- US-A1- 2010 036 947
- US-A1- 2010 162 399

## Beschreibung

### GEBIET DER ERFINDUNG

Die vorliegende Erfindung betrifft den Bereich der Telekommunikation, insbesondere ein Verfahren und eine Vorrichtung zur zeitnahen Information von Benutzer, die mit Schadsoftware insbesondere Klientensoftware für Botnetze infiziert sind.

Botnets bestehen aus beliebigen Rechnern im Internet, die durch Schadprogramme infiziert wurden. Diese Rechner können dann autonom von einem fremden Steuerrechner ferngesteuert Datenverkehr erzeugen, in der Absicht Schaden an Servern und anderen Rechner durch übermäßigen Datenverkehr (Traffic) hervorzurufen oder Manipulation von Sicherheitsmaßnahmen an einem Server zu veranlassen.

### STAND DER TECHNIK

Aus der Patentanmeldung EP 2 403 187 A1 ist ein Verfahren und ein System zum Erkennen von Hostrechnern eines Botnets bekannt, welches ein Verfahren, eine Vorrichtung und ein System zum Nachweis von Botnetzen und ein Netzwerk mit Funktionen zur Erkennung von durch Botnets infizierte Rechner umfasst. Weiterer technologischer Hintergrund ist in der US2010/162399 A1 und der US 2010/036947 A1 erläutert. Die US 2010/162399 A1 offenbart ein Verfahren und eine Vorrichtung zur Schützung eines Netzwerks vor Malware und Botnetaktivität. Die US 2010/036947 A1 offenbart ein Verfahren und eine Vorrichtung zur Reduktion von ungewünschtem Verkehr zwischen Peer-Netzwerken.

Die Datenumleitung kann auf Webseiten erfolgen, die nur eine Kopie der Originalseite anzeigen und den missbräuchlichen Datenverkehr aufzeichnen. Auch sind Rechner bekannt, die potentielle Angriffsziele von Botnet Rechnern simulieren, diese bezeichnet man auch als Honeypots. Siehe auch http://en.wikipedia.org/wiki/Honeypot (computing). Honeypotnetzwerke dienen dazu, Missbrauch durch Botnets aufzudecken, zu quantifizieren und die Herkunftsinformationen von infizierten Rechnern zu erkennen.

Die Erfindung ist im unabhängigen Anspruch 1 definiert. Bevorzugte Ausführungsformen der Erfindung sind in den abhängigen Ansprüchen definiert. Insbesondere bezieht sich die vorliegende Erfindung auf Verfahren zur Konfiguration eines Routers (Datengeräts), der mit einem Intranet und einem Internet in Verbindung steht. Der Router tauscht Informationen über eine Identität von Datenendgeräten bzw. Datengeräten, die über das Intranet mit dem Router (Datengerät) in Verbindung stehen, mit einem Server im Internet aus. Der Server vergleicht die Identität des Datenendgeräts/Datengeräts mit Identitäten einer ersten Gruppe von Identitäten von Datenendgeräten/Datengeräten, wobei der Router den Datenverkehr des Datenendgeräts dann beeinflusst, wenn die Identität des Datenendgeräts/Datengeräts zu der ersten Gruppe von Identitäten zugehörig ist, wobei die Beeinflussung des Datenverkehrs des Datenendgeräts ein Umleiten des Datenverkehrs ist.

Das Intranet kann ein drahtgebundenes LAN, ein drahtloses Netzwerk wie ein WLAN, Zigbees, ANT+, Bluetooth Netzwerk sein oder ein beliebiges Teilnetzwerk wie ein Teilnetzwerk des Internets, insbesondere auch ein WAN. Ein Internet ist ein Netzwerk von in der Regel weit entfernten oder global vernetzten Rechnern wie ein WAN. Ein Internet im Sinne der Erfindung könnte aber auch ein lokales oder Firmennetzwerk sein.

Ferner sieht die Erfindung vor, dass die erste Gruppe von Identitäten von Datenendgeräten solche Datenendgeräten betreffen, die durch eine Schadsoftware manipuliert wurden.

Des Weiteren sieht die Erfindung vorzugsweise vor, dass die Identität eines Datenendgeräts/Datengeräts dessen IP-Adresse, insbesondere eine öffentliche WAN IP Adresse ist.

Die Erfindung sieht vorzugsweise vor, dass die Beeinflussung des Datenverkehrs von dem Datenendgerät das Umleiten des Datenverkehrs auf eine vorbestimmte Webseite ist.

Die Erfindung sieht vorzugsweise vor, dass die Beeinflussung des Datenverkehrs von dem Datenendgerät das Umleiten des Datenverkehrs auf eine vorbestimmte auf dem Router lokal hinterlegte Webseite ist.

Ferner ist die Erfindung so ausgestaltet, dass ein System vorgesehen ist, welches das erfindungsgemäße Verfahren durchführt.

Der Vorteil der vorliegende Erfindung liegt darin, die Informationen, die aus Honeypot-Netzwerken vorliegen, regelmäßig mit einer Router-Konfiguration abzugleichen, um somit den Schaden eines durch ein oder mehrere Botnetze infizierten Rechners oder lokalen (Heim)Netzwerkes so klein wie möglich zu halten, und für den Benutzer des infizierten Rechners oder lokalen Netzwerkes präsent zu machen, ohne in den Inhalt des Datenverkehrs des infizierten Rechners einzugreifen.

Das vorliegende erfindungsgemäße Verfahren und System wird beschrieben durch die beigefügte Skizze, dabei bezeichnet
- Fig. 1: einen beispielhaften Aufbau einer Infrastruktur zur Durchführung des erfindungsgemäßen Verfahrens, bestehend aus einem Router, welcher in Wechselwirkung mit einem LAN und dem Internet steht.
- Fig. 2a: den schematischen Aufbau einer Router-Architektur.
- Fig. 2b: den schematischen Aufbau einer Router-Architektur unter Einbeziehung einer Haussteuerungseinheit zur audiovisuellen und multimedialen Benachrichtigung, falls ein Vorfall vorliegt.
- Fig. 3: eine Hinweis-Webseite, die dem Benutzer eines infizierten Rechners anstatt einer Zielwebseite präsentiert wird.

### DETAILLIERTE BESCHREIBUNG DER ERFINDUNG

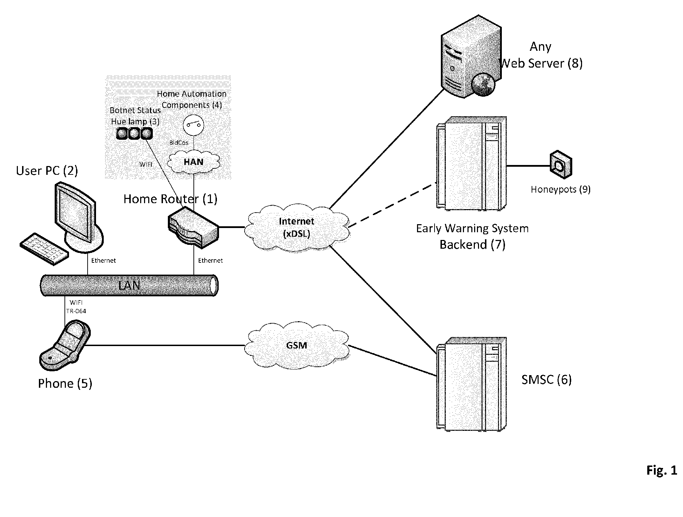

Figur 1 zeigt einen PC 2 (User PC; Datenendgerät), der durch ein Botnet-Virus infiziert wurde. Der Rechner 2 ist durch ein LAN mit einem Router 1 (Home Router; Datengerät) verbunden. Das Botnet-Virus auf dem Rechner 2 sendet Datenpakete über den Router 1 in das Internet, insbesondere um leicht zu manipulierende Rechner und Server in der Umgebung aufzuspüren. Ein solcher Angriff / Scan kann in einem Honeypot 9 der Telefonnetzbetreibers aufgezeichnet und an das Early Warning System 7 (EWS) geleitet werden. Das EWS stellt eine Blackliste der als boshaft identifizierten IP Adressen eines frei wählbaren Zeitraums, wie beispielsweise der letzten 30 Minuten zur Verfügung. Ferner kann auch ein Early Warning System (EWS; Server 7) aus Servern bestehen, die Daten aus verschiedenen Honeypots 9 aggregiert.

Das Botnet-Virus greift insbesondere Webserver 8 an (Any Web Server), die der Benutzer ansteuern möchte und versursacht einen erhöhten Traffic und wirtschaftlichen Schaden an angegriffenen Webservern. Zudem ist der Telefonnetzbetreiber verpflichtet, den Angriff von Schadsoftware aus seinem Netz heraus so gering wie möglich zu halten.

Erfindungsgemäß wird die Anforderung der Verhinderung von Anfragen von Botnets wie folgt gelöst.

Der Routerbetriebssoftware wird eine Applikation beigefügt, welche in regelmäßigen Abständen das Honeypot-System 9 bzw. das Early Warning System 7 abfragt, ob ein Rechner in dem Internet oder Local Area Network (LAN), der an den Router 1 angeschlossen ist eine Botnet-Anfragen erzeugt. Dies geschieht über den Abgleich der öffentlichen IP Adresse.

Wird diese Anfrage seitens des Honeypot-Systems 9 (hier beispielsweise das Early Warning Systems 7) positiv beantwortet, filtert der Router 1 den Traffic des infizierten Rechners 2 in dem angeschlossenen LAN aus dem Datenstrom heraus. Bei einer Anfrage eines Benutzers des infizierten Rechners 2 wird dann anstatt einer angefragten Zielwebseite eine lokale Webseite mit einem Warnhinweis eingeblendet. Ferner wird die Anfrage eines Benutzers des infizierten Rechners 2 optional auf eine externe Webseite insbesondere in einem Walled Garden umgeleitet. Der Benutzer wird darauf hingewiesen, dass ein Rechner 2 durch ein Botnet Virus infiziert ist und die ursprünglich angefragte Zielwebseite erst nach Lesen und Bestätigung des Warnhinweises und optional dem Lösen einer Sicherheitsabfrage, um sicherzustellen, dass es sich dabei um einen Nutzer und nicht um ein Softwareprogramm handelt, welches die Anfrage stellt, freigegeben wird. Es ist auch möglich, dass automatische Programme dabei gestartet werden, die die Schadsoftware von dem Botnet-Rechner entfernen.

Alternativ oder zusätzlich kann auch eine Nachricht von dem Router 1 an den Early Warning Server oder einen von diesem bestimmten Server 7 geleitet werden, welcher eine vorbestimmte Nachricht an ein Kurznachrichten-Center 6 (SMSC) eines Telekommunikationsanbieters weiterleitet. Das SMSC 6 senden dann an eine dem Benutzer zugeordnete vorbestimmte Mobilfunknummer eine Kurznachricht an das Telefon 5 mit einem Hinweis auf die Infizierung eines benutzten Botnet-Rechners durch eine Schadsoftware.

Desweiteren kann eine Nachricht auch über einen anderen Kurzmitteilungsdienst oder auch per Mail, Kurier oder Briefpost zugestellt werden.

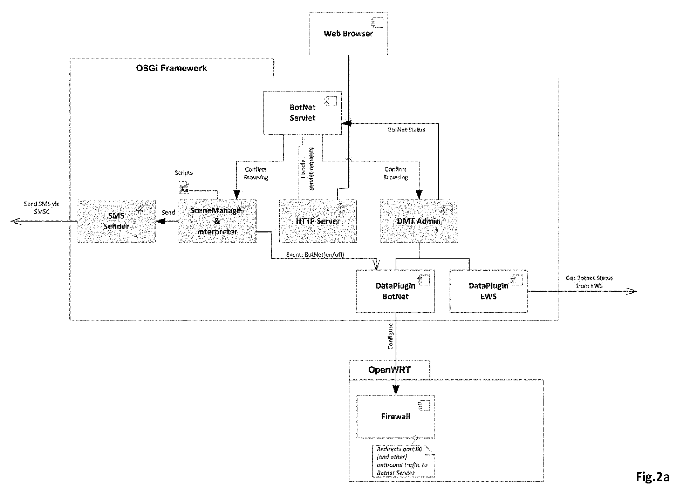

Die Komponenten einer beispielhaften schematischen Architektur eines Routers 1 sind in Figur 2a dargestellt. Die Architektur weist im Wesentlichen zwei Bestandteile auf: Die Ausführungsumgebung OSGi Framework und dem Router-Betriebssystem OpenWRT. In dem OSGI Framework ist eine Applikation, Botnet Servlet, eingefügt.

Das Servlet steht in Wechselwirkung mit dem HTTP Server und dem DMT Admin, der wiederrum die für die Steuerung des Netzwerkverkehrs zuständigen Komponenten kontrolliert.

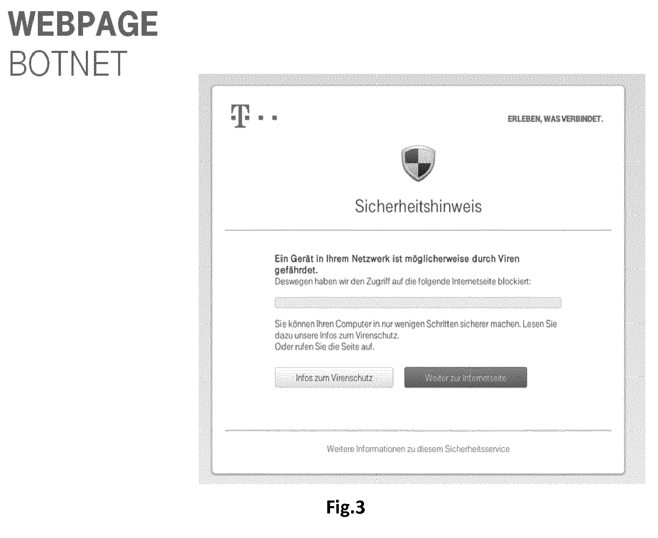

Diese Applikation dient dem Verbindungsaufbau, der Abfrage des Honeypot-Netzwerks 9 und auch zur Benachrichtigung des Nutzers eines infizierten Rechners 2 über eine spezielle Webseite in Verbindung mit dem HTTP Server, welche Figur 3 dargestellt ist. Ferner initiiert die Applikationen Botnet Servlet auch den SceneManager & Interpreter, der eine Benachrichtigung durch einen Kurzmitteilungsdienst an das SMSC 6 per SMS an das Mobilfunk Gerät des Benutzers sendet.

Ferner existiert auch ein DataPlugin Botnet, welches mit dem Teil Betriebssystems OpenWRT in Wechselwirkung steht, um die Firewall des Routers 1 zu konfigurieren, sodass verdächtiger Datenverkehr von einem infizierten Rechner 2 durch die Firewall umgeleitet wird.

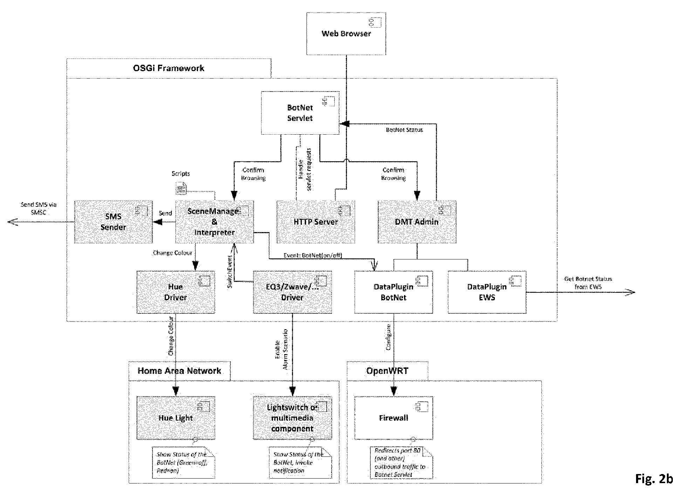

In Fig 2b ist eine Erweiterung der Fig. 2a dargestellt, in der der Router 1 in Verbindung mit einer Haussteuerung steht. Hier befindet sich der SceneManger & Interpreter (dabei handelt es sich um Komponenten zur Regelverarbeitung in der Haussteuerung) in Wechselwirkung mit einem Hue^{®} Driver und einem EQ3^{®}/Zwave^{®} Driver. Der SceneManger & Interpreter kann im Fall der Erkennung eines Rechners als Botnet Rechner auf die Haussteuerung in einem Home Automation Network (HAN) eingreifen, und somit Signale über die Hauselektronik aussenden, wie zum beispielsweise Ein- oder Ausschalten eines farbigen Signallichts.

Weitere Ausführungen können dem Fachmann bei Betrachtung in der Beschreibung der vorliegenden Erfindung in den Sinn kommen. Beispielweise kann der Rechner automatisch in dem Intranet identifiziert werden und mittels Virenscannersoftware untersucht und neu installiert werden.

Weiterhin kann der Router auch einem Meldung auf eine Webseite des Internet Service Providers abgeben, in der Informationen über den Sicherheitszustand der in dem Netz versorgten Rechner verarbeitet wird.

## Patentansprüche

1. Verfahren der Konfiguration eines Datengerätes (1), welches mit einem Intranet (LAN) und einem Internet in Verbindung steht, das Informationen über eine Identität des Datengeräts (1) mit einem Server (7) im Internet austauscht,
wobei die Identität des Datengeräts (1) mit Identitäten einer ersten Gruppe von Identitäten von Datengeräten (1) verglichen wird,
wobei das Datengerät (1) den Datenverkehr eines an das Datengerät (1) angeschlossenen Datenendgeräts (2) dann beeinflusst, wenn die Identität des Datengeräts (1) zu der ersten Gruppe von Identitäten zugehörig ist, und
wobei die Beeinflussung des Datenverkehrs des Datenendgeräts (2) ein Umleiten des Datenverkehrs ist,
wobei die erste Gruppe von Identitäten von Datengeräten (1) solche Datengeräte (1) betrifft, die mit einem Datenendgerät (2) verbunden sind, das mit Schadsoftware manipuliert wurde.

2. Verfahren nach Anspruch 1, wobei das Datengerät (1) ein Router (1) ist.

3. Verfahren nach Anspruch 1 oder 2, wobei der Vergleich der Identität des Datengeräts (1) auf dem Server (7) erfolgt.

4. Verfahren nach einem der vorhergehenden Ansprüche, wobei die Identität eines Datengeräts (1) dessen IP-Adresse ist.

5. Verfahren nach Anspruch 4, wobei der Vergleich der IP-Adresse des Datengeräts (1) mit einer ersten Gruppe von Adressen auf dem Server in Form eines Early Warning Systems (7) erfolgt, das eine Blackliste der als boshaft identifizierten IP Adressen eines frei wählbaren Zeitraums zur Verfügung stellt.

6. Verfahren nach einem der vorhergehenden Ansprüche, wobei die Beeinflussung des Datenverkehrs von dem Datenendgerät (2) ein Umleiten des Datenverkehrs auf eine vorbestimmte Webseite ist.

7. Verfahren nach einem der vorhergehenden Ansprüche, wobei die Beeinflussung des Datenverkehrs von dem Datenendgerät (2) das Umleiten des Datenverkehrs auf eine vorbestimmte auf dem Datengerät (1) lokal hinterlegte Webseite ist.

8. System mit einem Server (7) und mit einem Datengerät (1), welches mit einem Intranet (LAN) und einem Internet in Verbindung steht, das Informationen über eine Identität des Datengeräts (1) mit dem Server (7) im Internet austauscht, zur Durchführung des Verfahrens nach einem der vorhergehenden Ansprüche auf dem Datengerät (1), wobei der Server dazu angepasst ist, den Vergleich durchzuführen.

## Claims

1. A method of configuring a data device (1), said device communicating with an intranet (LAN) and an internet and exchanging information on an identity of the data device (1) with a server (7) in the internet,
wherein the identity of the data device (1) is compared with the identities of a first group of identities of data devices (1),
wherein the data device (1) influences the data traffic of a data terminal (2) connected to the data device (1), if the identity of the data device (1) is associated with the first group of identities and
wherein the influence on the data traffic of the data terminal (2) is a redirection of the data traffic,
wherein the first group of identities of data devices (1) relates to those data devices (1) that are connected to a data terminal (2) that has been manipulated by malware.

2. The method of claim 1, wherein the data device (1) is a router (1).

3. The method of claim 1 or 2, wherein the identity of the data device (1) is compared on the server (7).

4. The method of any of the preceding claims, wherein the identity of a data device (1) is its IP address.

5. The method of claim 4, wherein the IP address of the data device (1) is compared with a first group of addresses on the server in the form of an early warning system (7) that provides a blacklist of the IP addresses identified as malicious during a user-definable period of time.

6. The method of any of the preceding claims, wherein the influence on the data traffic of the data terminal (2) consists in a redirection of the data traffic on a predetermined website.

7. The method of any of the preceding claims, wherein the influence on the data traffic of the data terminal (2) consists in the redirection of the data traffic to a predetermined website locally deposited on the data device (1).

8. A system comprising a server (7) and
a data device (1) communicating with an intranet (LAN) and an internet and exchanging information on an identity of the data device (1) with the server (7) in the internet, for implementing the method of any of the preceding claims on the data device (1),
wherein the server is adapted to make the comparison.

## Revendications

1. Procédé de configuration d'un appareil de données (1), qui est en liaison avec un intranet (LAN) et un internet, qui échange des informations sur une identité de l'appareil de données (1) avec un serveur (7) dans l'internet,
dans lequel l'identité de l'appareil de données (1) est comparée avec des identités d'un premier groupe d'identités d'appareils de données (1),
dans lequel l'appareil de données (1) influence la circulation de données d'un terminal de données (2) connecté à l'appareil de données (1) quand l'identité de l'appareil de données (1) appartient au premier groupe d'identités, et
dans lequel l'influence exercée sur la circulation de données du terminal de données (2) est une déviation de la circulation de données,
dans lequel le premier groupe d'identités d'appareils de données (1) concerne des appareils de données (1) qui sont connectés à un terminal de données (2) qui a été manipulé par un logiciel malveillant.

2. Procédé selon la revendication 1, dans lequel l'appareil de données (1) est un routeur (1).

3. Procédé selon la revendication 1 ou 2, dans lequel la comparaison de l'identité de l'appareil de données (1) s'effectue sur le serveur (7).

4. Procédé selon l'une des revendications précédentes, dans lequel l'identité d'un appareil de données (1) est son adresse IP.

5. Procédé selon la revendication 4, dans lequel la comparaison de l'adresse IP de l'appareil de données (1) avec un premier groupe d'adresses s'effectue sur le serveur sous la forme d'un Early Warning System (7) qui met à disposition une liste noire des adresses IP, identifiées comme malveillantes, d'une période pouvant être choisie librement.

6. Procédé selon l'une des revendications précédentes, dans lequel l'influence exercée sur la circulation de données du terminal de données (2) est une déviation de la circulation de données vers une page web prédéfinie.

7. Procédé selon l'une des revendications précédentes, dans lequel l'influence exercée sur la circulation de données du terminal de données (2) est la déviation de la circulation de données vers une page web prédéfinie enregistrée localement sur l'appareil de données (1).

8. Système avec un serveur (7) et avec
un appareil de données (1), qui est en liaison avec un intranet (LAN) et un internet, qui échange des informations sur une identité de l'appareil de données (1) avec le serveur (7) dans l'internet, pour la réalisation du procédé selon l'une des revendications précédentes sur l'appareil de données (1),
dans lequel le serveur est adapté pour réaliser la comparaison.
